(19) Europäisches Patentamt
European Patent Office
Office européen des brevets

(11) **EP 1 569 316 B1**

(12) **EUROPEAN PATENT SPECIFICATION**

(45) Date of publication and mention
of the grant of the patent:
**04.05.2011 Bulletin 2011/18**

(51) Int Cl.:
***H02J 7/00*** *(2006.01)*

(21) Application number: **04251147.7**

(22) Date of filing: **27.02.2004**

(54) **Method and apparatus for simultaneously charging multiple rechargeable batteries**

Vorrichtung und Verfahren für gleichzeitiges Laden von mehreren Akkumulatoren

Appareil et procédé pour recharger simultanément plusieurs batteries rechargeables

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(43) Date of publication of application:
**31.08.2005 Bulletin 2005/35**

(73) Proprietor: **RESEARCH IN MOTION LIMITED**
**Waterloo, Ontario N2L 3W8 (CA)**

(72) Inventors:
• **Bayne, Ryan Mitchell**
  **Waterloo**
  **Ontario N2L 3P7 (CA)**

• **Purdy, Michael L.**
  **Cambridge**
  **Ontario N1S 3H2 (CA)**

(74) Representative: **Rickard, David John et al**
  **Ipulse**
  **26 Mallinson Road**
  **London**
  **SW11 1BP (GB)**

(56) References cited:
  **EP-A- 1 124 300   FR-A- 2 841 699**
  **US-A- 5 717 309   US-A- 6 002 237**
  **US-B- 6 184 652**

**Description**

The invention relates generally to chargers for rechargeable batteries of mobile electronic devices. In particular, embodiments of the invention relate to a method for simultaneously charging the battery inside a mobile electronic device and a second battery for the mobile electronic device.

BACKGROUND OF THE INVENTION

Many users of mobile electronic devices have a second battery on hand for use when the battery in the mobile electronic device is discharged. After discharging both batteries, a user will want to recharge the two batteries as quickly as possible.

Current options include the following:

a) Fully charging one battery using the charging circuitry in the mobile electronic device and an external power adapter, then exchanging the two batteries to charge the second battery.
b) Charging one battery using the charging circuitry in the mobile electronic device and an external power adapter, and simultaneously charging the second battery in an external battery charger;
c) Charging one battery using the charging circuitry in the mobile electronic device connected to a dual-output external battery charger, with the second battery connected to the other output of the external battery charger. The external battery charger charges the batteries in sequential order without user intervention, or trickle charges one of the batteries while charging the other battery at full rate until it is fully charged, or gives one battery priority and provides all available current to that battery and any remaining current that can be supplied to the charger is provided to the secondary battery (see for example EP1124300).

These options either extend the charge time by charging the batteries in sequential order, by keeping one battery in slow-rate trickle charge until it is fully charged, or require the user to carry two separate charging accessories with them.

FR2841699 discloses a portable charger comprising a connection to an electric source, a plurality of connecting points of rechargeable portable appliances for different usage, and an adapter, tapping power supply at the electric source and adapting it to the recharging supply of the rechargeable portable appliances. The adapter includes a microprocessor and a multiple output converter delivering voltages and currents adapted to the appliances to be recharged. The adapter adapts the charge power to the portable appliance based on the charge programme for that appliance. The charger enables simultaneous recharge of different rechargeable appliances in a manner adapted to each appliance.

In one aspect, the invention provides a method of charging two or more rechargeable batteries from a single current source by use of two or more separate charging ports, the batteries being coupled to different respective charging ports, wherein the method comprises: determining relative amounts of charge required to fully charge said two or more rechargeable batteries, and allocating charging currents from the single current source to the two or more separate charging ports based on said relative amounts of charge so that said two or more rechargeable batteries will become fully charged at substantially the same time. A charging current allocated to a particular charging port may be determined at least in part on an average current drain during usage of the rechargeable battery coupled to the particular charging port.

In another aspect, the invention provides a charger for charging two or more rechargeable batteries, the charger comprising: a single current source; two or more separate charging ports, a current allocator for allocating charging currents from said single current source to said two or more ports; and a controller for determining relative amounts of charge required to fully charge two or more rechargeable batteries coupled to different respective ones of said two or more ports and for determining said charging currents to be allocated by said current allocator based on said determined relative amounts of charge so that said two or more rechargeable batteries will become fully charged at substantially the same time.

The charger may include a measurement unit to measure voltage differences at the two or more charging ports for use in determining said charging currents. The charger may also include one or more lookup tables. The controller may determine from the one or more lookup tables an amount of charge required to fully charge a battery based on a measured voltage difference, a battery type, and an average current drain of the battery during usage.

One of the two or more rechargeable batteries, in use of the charger, may be inside a battery-operated device. The controller may receive a voltage of the one rechargeable battery from the battery-operated device for use in determining an amount of charge required to fully charge the one rechargeable battery. The charger may include one or more lookup tables, and the controller may determine from the one or more lookup tables an amount of charge required to fully charge a battery based on the received voltage for the one rechargeable battery, a battery type, and an average current drain of the battery during usage.

## BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

FIG. 1 is simplified front view of a charger, a battery-operated device and a battery, in accordance with some embodiments of the invention.

FIG. 2 is a simplified block diagram of a charger, a battery-operated device and a battery, in accordance with some embodiments of the invention;

FIG. 3 is a simplified block diagram of a charger and two batteries, in accordance with some embodiments of the invention; and

FIG. 4 is a flowchart of an exemplary method for simultaneously charging multiple rechargeable batteries, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

## DETAILED DESCRIPTION OF EMBODIMENTS OF THE INVENTION

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the invention.

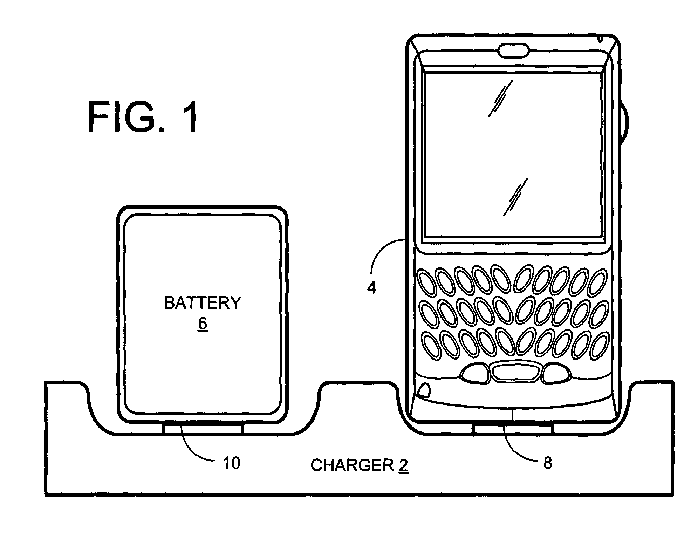

Reference is made to FIG. 1, which is simplified front view of a charger 2, a battery-operated device 4 and a battery 6, in accordance with some embodiments of the invention. Charger 2 may have, for example, two charging ports 8 and 10. Battery-operated device 4 is coupled to charging port 8 and battery 6 is coupled to charging port 10.

Charger 2 may be capable of simultaneously charging the battery of battery-operated device 4 and battery 6. In some embodiments of the invention, charger 2 may have more than two charging ports, and may therefore be capable of simultaneously charging more than two batteries. For example, a charger according to some embodiments of the invention may have five charging ports, and may be capable of simultaneously charging one, two, three, four or five batteries.

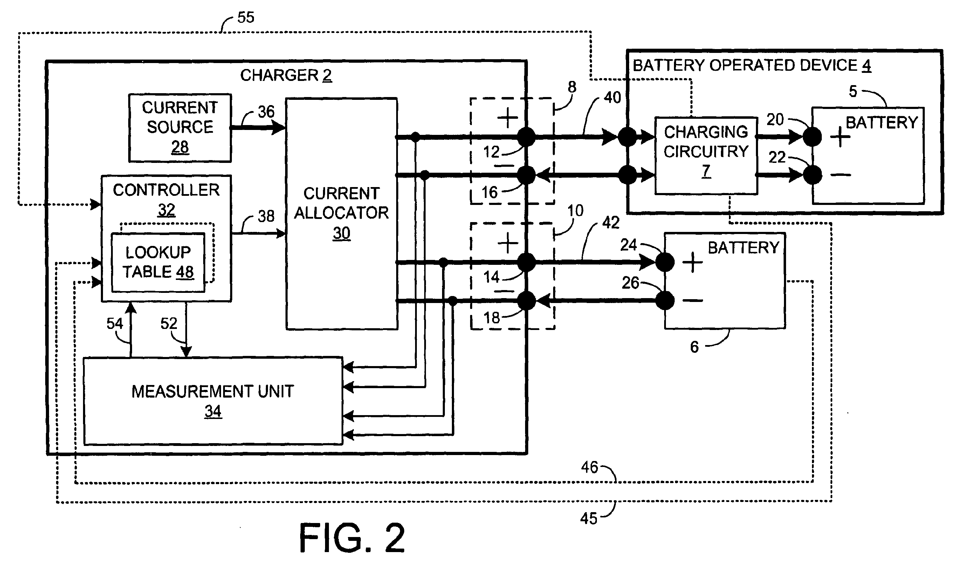

Reference is now made to FIG. 2, which is a simplified block diagram of charger 2, battery-operated device 4 and battery 6, in accordance with some embodiments of the invention. Battery-operated device 4 may include a battery 5 and charging circuitry 7. Charger 2 may have, for example, two charging ports 8 and 10, having respective positive terminals 12 and 14, and respective negative terminals 16 and 18.

For charger 2 to charge battery 5, a positive terminal 20 of battery 5 may be coupled to positive terminal 12 of charging port 8 via charging circuitry 7 and a negative terminal 22 of battery 5 may be coupled to negative terminal 16 of charging port 8 via charging circuitry 7. Similarly, for charger 2 to charge battery 6, a positive terminal 24 of battery 6 may be coupled to positive terminal 14 of charging port 10 and a negative terminal 26 of battery 6 may be coupled to negative terminal 18 of charging port 10.

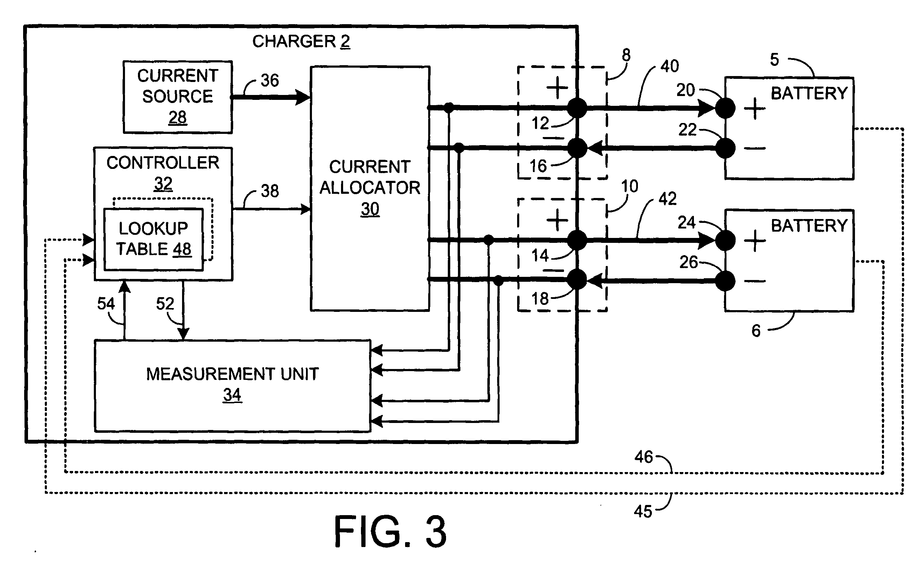

Reference is made additionally to FIG. 3, which is a simplified block diagram of charger 2 and batteries 5 and 6 to be charged, in accordance with some embodiments of the invention. Many of the elements in FIG. 3 are the same as or similar to elements of FIG. 2, and therefore the following description applies equally to FIG. 2 and FIG. 3.

Charger 2 may include a current source 28, a current allocator 30, a controller 32 and a measurement unit 34. Current source 28 may be capable of providing a current 36 of, for example, 500 milliamps (mA). Current allocator 30 may receive current 36, and may be capable of allocating a current portion 40 of current 36 to charging port 8 and a current portion 42 of current 36 to charging port 10. For example, current portion 40 may be 140 mA and current portion 42 may be 360 mA.

The allocation proportions of current 36 to current portions 40 and 42 may be controllable, at least in part, by controller 32 via control signals 38.

According to some embodiments of the invention, controller 32 may optionally receive battery type identifications 45 and 46 from batteries 5 and 6, respectively. (In the case of battery 5 coupled to the charging port via battery-operated device 4, as shown in FIG. 2, charging circuitry 7 may obtain the battery type identification from battery 5 and pass the information onwards to controller 32.) Controller 32 may comprise one or more look up tables 48 containing information regarding one or more types of batteries. Such information may include, for example, the maximum charge capacity, the average current drain from the battery during usage, and the estimated relationship between the output voltage of the battery and the unused capacity of the battery.

According to other embodiments of the invention, the type of batteries 5 and 6, and optionally the average current drain from batteries 5 and 6 during usage may be known in advance. For example, mechanical constraints may mean that only one type of battery can be coupled to charging port 8 or to charging port 10.

Measurement unit 34 may be capable of measuring the voltage difference between positive terminal 12 and negative terminal 16, and may be capable of measuring the voltage difference between positive terminal 14 and negative terminal 18.

Measurement unit 34 may be controlled, at least in part, by controller 32. Controller 32 may command measurement unit 34 via signals 52 to measure the voltage difference between positive terminal 12 and negative terminal 16, and may receive the measurement result from measurement unit 34 via signals 54. In addition, controller 32 may command measurement unit 34 via signals 52 to measure the voltage difference between positive terminal 14 and negative terminal 18, and may receive the measurement result from measurement unit 34 via signals 54.

In some situations where battery 5 is included in battery-operated device 4, and battery-operated device 4 is coupled to charging port 8, the voltage difference between positive terminal 12 and negative terminal 16 may not represent the voltage of battery 5. In such situations, battery-operated device 4 may report the actual voltage of battery 5 to controller 32 via a data path 55.

Controller 32 may use look-up table 48 to determine the charge in the battery coupled to the charging port from the measurement of the voltage difference and the average current drain from the battery during usage.

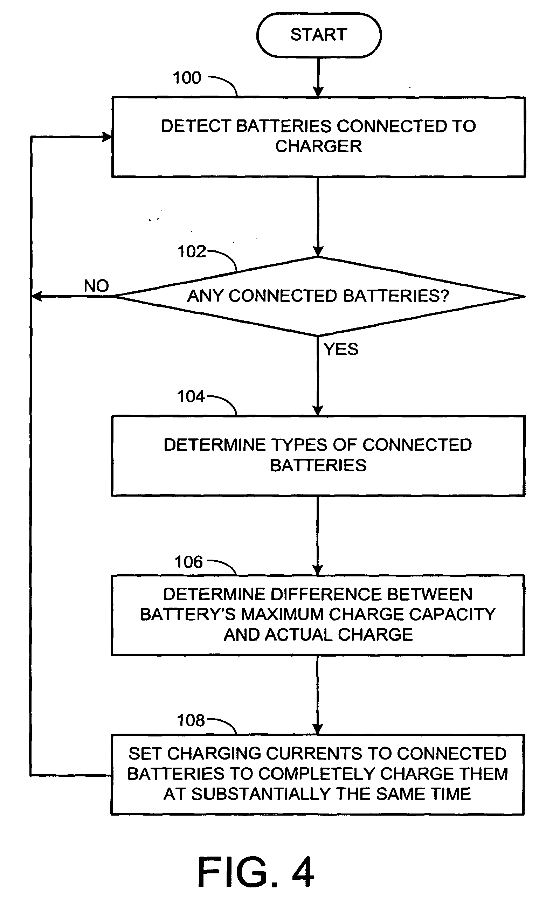

FIG. 4 is a flowchart of an exemplary method for simultaneously charging multiple rechargeable batteries, according to some embodiments of the invention. The exemplary method of FIG. 4 may be executed by controller 32, although the invention is not limited in this respect.

Controller 32 may check whether any batteries are coupled to charging ports 8 and 10 (100). If no battery is coupled to charging ports 8 and 10 (102), the method may continue to block 100. However, if at least one battery is coupled (to either charging port 8, charging port 10, or to both), controller 32 may determine the types of the coupled batteries (104). The difference between the maximum charge capacity and the charge in the battery is determined for each of the coupled batteries (106). For example, this difference is determined by measuring the battery's voltage and obtaining the corresponding information from look up tables 48 for the average current drain from the battery during usage.

The charging current for each of the coupled batteries is set (e.g., current portions 40 and 42) so that all coupled batteries may become fully charged at substantially the same time (108).

From time to time, the method may repeat from block 100 in order to detect changes in the number and type of coupled batteries, and to adjust the charging currents accordingly, and to adjust the charging currents according to the progress of the charging process.

The following table lists an example where battery 5 is charged to 60% of its maximum capacity and battery 6 is charged to 40% of its maximum capacity.

Table 1

|  | **Battery 5** | **Battery 6** |
|---|---|---|
| **maximum capacity** | 600 mAh | 1000 mAh |
| **charge in battery** | 360 mAh | 400 mAh |
| **amount of charge required to fully charge battery** | 240 mAh | 600 mAh |
| **time required to fully charge battery** | 240 mAh / (current portion 40) | 600 mAh / (current portion 42) |

In the example given in FIG. 1, the total available current (current 36) is 500 mA. Therefore, the sum of current portion 40 and current portion 42 may not exceed 500 mA.

In order for both battery 5 and battery 6 to be fully charged at substantially the same time, current allocator 30 will allocate current portion 40 to battery 5 and current portion 42 to battery 6 according to the following calculation:

$$240 \text{ mAh} * (\text{current portion } 42) = 600 \text{ mAh} * (\text{current portion } 40)$$

$$240 \text{ mAh} * (500 - \text{current portion } 40) = 600 \text{ mAh} * (\text{current portion } 40)$$

current portion 40 = 142 mA

current portion 42 = 358 mA

Since the charge profile of rechargeable batteries is not linear in nature, controller 32 may recheck the charge of the batteries from time to time so that current allocator 30 can readjust the charge allocation accordingly.

While certain features of the invention have been illustrated and described herein, many modifications, substitutions, changes, and equivalents will now occur to those of ordinary skill in the art.

**Claims**

1. A method of charging two or more rechargeable batteries (5,6) from a single current source (28) by use of two or more separate charging ports (8,10), the batteries (5,6) being coupled to different respective charging ports (8,10), comprising:

   determining relative amounts of charge required to fully charge said two or more rechargeable batteries (5,6), and

   **characterised in that** allocation of charging currents from the single current source (28) to the two or more separate charging ports (8,10) is based on said relative amounts of charge so that said two or more rechargeable batteries (5,6) will become fully charged at substantially the same time.

2. The method of claim 1, wherein the step of determining comprises determining the relative amounts of charge required to fully charge said at least two or more rechargeable batteries (5,6) based on a difference between a maximum charge capacity and a charge in the battery for each of the two or more rechargeable batteries (5,6).

3. The method of claim 2, comprising the step of determining, for each of the two or more rechargeable batteries (5,6), the charge in the battery by obtaining a voltage difference of the battery and information on an average current drain from the battery during usage.

4. The method of claim 3, wherein the step of obtaining a voltage difference for each of the two or more rechargeable batteries (5,6) comprises measuring the voltage difference for each battery at its respective charging port (8,10).

5. The method of claim 3, wherein one of said two or more rechargeable batteries (5) is inside a battery-operated device (4) and said method comprises receiving a voltage difference of said one rechargeable battery (5) from said battery-operated device (4) for use in determining the charge in the battery (5).

6. The method of any one of claims 3 to 5, wherein the information on an average current drain from the battery during usage is obtained from a look-up table (48).

7. The method of claim 6, comprising the step of determining types of the two or more rechargeable batteries (5,6) to obtain the information from the look-up table (48).

8. The method of claim 1 or claim 2, further comprising:

   determining a charging current allocated to a particular charging port at least in part on an average current drain during usage of the rechargeable battery coupled to said particular charging port.

9. The method of any one of the preceding claims, further comprising the step of adjusting the allocated charging currents to the two or more different respective charging ports (8,10) according to progress of the battery charging process.

10. The method of claim 9, wherein the step of adjusting comprises, for each of the two or more rechargeable batteries (5,6), checking a charge in the battery from time to time in order to readjust the allocated charging currents.

11. The method of any one of the preceding claims, wherein it comprises a method of charging rechargeable batteries (5,6) of mobile electronic devices (4).

12. The method of any one of claims 1 to 11, wherein the single current source is a 500mA current source.

13. A charger (2) for charging two or more rechargeable batteries (5,6), the charger (2) comprising:

a single current source (28);
two or more separate charging ports (8,10),
a current allocator (30) for allocating charging currents from said single current source (28) to said two or more ports (8,10) ; and

**characterised in that** a controller (32) for determining relative amounts of charge required to fully charge two or more rechargeable batteries (5,6) coupled to different respective ones of said two or more ports (8,10) and for determining said charging currents to be allocated by said current allocator (30) based on said determined relative amounts of charge so that said two or more rechargeable batteries (5,6) will become fully charged at substantially the same time.

14. The charger (2) of claim 13, wherein the controller (32) is adapted to determine the relative amounts of charge required to fully charge said at least two or more rechargeable batteries (5,6) based on a difference between a maximum charge capacity and a charge in the battery for each of the two or more rechargeable batteries (5,6).

15. The charger (2) of claim 14, further comprising:

a measurement unit (34) adapted to measure voltage differences at said two or more ports (8,10) for use in determining said charging currents.

16. The charger (2) of claim 15, further comprising:

one or more lookup tables (48),

wherein said controller (32) is adapted to determine from information contained in said one or more lookup tables (48) an amount of charge required to fully charge a battery based on a measured voltage difference and an average current drain of said battery during usage.

17. The charger (2) of claim 16, wherein the controller (32) is adapted to determine types of the two or more rechargeable batteries (5,6) to obtain information contained in the look-up table (48).

18. The charger (2) of any one of claims 13 to 17, wherein one of said two or more rechargeable batteries (5), in use of the charger (2), is inside a battery-operated device (4) and said controller (32) is adapted to receive a voltage difference of said one rechargeable battery (5) from said battery-operated device (4) for use in determining an amount of charge required to fully charge said one rechargeable battery (5).

19. The charger (2) of claim 18, further comprising:

one or more lookup tables (48),

wherein said controller (32) determines from said one or more lookup tables (48) the amount of charge required to fully charge said one rechargeable battery (5) based on a received voltage for said one rechargeable battery (5), a battery type, and an average current drain of said one rechargeable battery during usage.

20. The charger (2) of any one of claims 13 to 19, wherein the controller (32) is adapted to control the current allocator (30) to adjust the allocated charging currents to the two or more different respective charging ports (8,10) according to the progress of the battery charging process.

21. The charger (2) of claim 20, wherein the controller (32) is adapted to perform the step of adjusting, for each of the two or more rechargeable batteries (5,6), by checking a charge in the battery from time to time in order to control the current allocator (30) to readjust the allocated charging currents.

22. The charger (2) of any one of claims 13 to 21 comprising a charger for a mobile electronic device (4).

23. The charger of any one of claims 13 to 22, wherein the single current source comprises a 500mA current source.

24. A combination of a mobile electronic device (4) and a charger (2) therefore according to any one of claims 13 to 23.

**Patentansprüche**

1. Verfahren zum Aufladen von zwei oder mehreren wiederaufladbaren Akkumulatoren (5,6) aus einer einzigen Stromquelle (28) unter Benutzung von zwei oder mehreren getrennten Ladeanschlüssen (8,10), wobei die Akkumulatoren (5,6) an verschiedene entsprechende Ladeanschlüsse (8,10) angeschlossen sind, umfassend:

   das Bestimmen relativer Auflademengen, die erforderlich sind, um die zwei oder mehreren wiederaufladbaren Akkumulatoren (5,6) vollständig aufzuladen, und

   **dadurch gekennzeichnet, dass** das Zuteilen von Aufladeströmen aus der einzigen Stromquelle (28) an die zwei oder mehreren getrennten Ladeanschlüsse (8,10) auf den relativen Auflademengen basiert, so dass die zwei oder mehreren wiederaufladbaren Akkumulatoren (5,6) im Wesentlichen gleichzeitig vollständig aufgeladen werden.

2. Verfahren nach Anspruch 1, wobei der Schritt des Bestimmens das Bestimmen der relativen Auflademengen, die zum vollständigen Aufladen der mindestens zwei oder mehreren wiederaufladbaren Akkumulatoren (5,6) erforderlich sind, auf der Basis eines Unterschied zwischen einer maximalen Aufladekapazität und einer Ladung in dem Akkumulator für jeden der zwei oder mehreren wiederaufladbaren Akkumulatoren (5,6) umfasst.

3. Verfahren nach Anspruch 2, umfassend den Schritt des Bestimmens, für jeden der zwei oder mehreren wiederaufladbaren Akkumulatoren (5,6), der Ladung in dem Akkumulator durch Erhalten eines Spannungsunterschieds des Akkumulators und von Angaben über einen durchschnittlichen Stromverbrauch des Akkumulators während der Benutzung.

4. Verfahren nach Anspruch 3, wobei der Schritt des Erhaltens eines Spannungsunterschieds für jeden der zwei oder mehreren wiederaufladbaren Akkumulatoren (5,6) das Messen des Spannungsunterschieds für jeden Akkumulator an seinem jeweiligen Ladeanschluss (8,10) umfasst.

5. Verfahren nach Anspruch 3, wobei einer der zwei oder mehreren wiederaufladbaren Akkumulatoren (5) sich innerhalb einer akkumulatorbetriebenen Vorrichtung (4) befindet und das Verfahren das Empfangen eines Spannungsunterschieds des einen wiederaufladbaren Akkumulatoren (5) von der akkumulatorbetriebenen Vorrichtung (4) zur Anwendung beim Bestimmen der Ladung in dem Akkumulator (5) umfasst.

6. Verfahren nach einem der Ansprüche 3 bis 5, wobei die Angaben über den durchschnittlichen Stromverbrauch des Akkumulators während der Benutzung aus einer Nachschlagtabelle (48) erhalten werden.

7. Verfahren nach Anspruch 6, umfassend der Schritt des Bestimmens von Typen der zwei oder mehreren wiederaufladbaren Akkumulatoren (5,6), um die Angaben aus der Nachschlagetabelle (48) zu erhalten.

8. Verfahren nach Anspruch 1 oder Anspruch 2, des Weiteren umfassend:

   das Bestimmen eines Aufladestroms, der einem spezifischen Ladeanschluss zugeteilt ist, zumindest teilweise auf der Basis eines durchschnittlichen Stromverbrauchs während der Benutzung des wiederaufladbaren Akkumulators, der an den spezifischen Ladeanschluss angeschlossen ist.

9. Verfahren nach einem der vorhergehenden Ansprüche, des Weiteren umfassend den Schritt des Einstellens der zugeteilten Aufladeströme an die zwei oder mehreren jeweiligen Ladeanschlüsse (8,10) dem Fortschreiten des Akkumulatoraufladevorgangs entsprechend.

10. Verfahren nach Anspruch 9, wobei der Schritt des Einstellens für jeden der zwei oder mehreren wiederaufladbaren Akkumulatoren (5,6) das Überprüfen einer Ladung in dem Akkumulator von Zeit zu Zeit umfasst, um die zugeteilten Aufladungsströme erneut einzustellen.

11. Verfahren nach einem der vorhergehenden Ansprüche, wobei es ein Verfahren zum Aufladen wiederaufladbaren Akkumulatoren (5,6) mobiler elektronischer Geräte (4) umfasst.

12. Verfahren nach einem der Ansprüche 1 bis 11, wobei die einzige Stromquelle eine 500 mA-Stromquelle ist.

**13.** Aufladegerät (2) zum Aufladen von zwei oder mehreren wiederaufladbaren Akkumulatoren (5,6), wobei das Aufladegerät (2) Folgendes umfasst:

eine einzige Stromquelle (28);
zwei oder mehrere getrennte Ladeanschlüsse (8,10),
einen Stromzuteiler (30) zum Zuteilen von Aufladeströmen aus der einzigen Stromquelle (28) zu den zwei oder mehreren Anschlüssen (8, 10); und

**dadurch gekennzeichnet, dass** ein Regler (32) zum Bestimmen relativer Auflademengen, die zum vollständigen Aufladen von zwei oder mehreren wiederaufladbaren Akkumulatoren (5,6) erforderlich sind, die an verschiedene jeweilige der zwei oder mehreren Anschlüsse (8, 10) angeschlossen sind, und zum Bestimmen der Aufladungsströme, die dem Stromzuteiler (30) auf der Basis der bestimmten relativen Auflademengen zugeteilt werden sollen, so dass die zwei oder mehreren wiederaufladbaren Akkumulatoren (5,6) im Wesentlichen gleichzeitig vollständig aufgeladen werden.

**14.** Aufladegerät (2) nach Anspruch 13, wobei der Regler (32) geeignet ist, die relativen Auflademengen, die zum vollständigen Aufladen der mindestens zwei oder mehreren wiederaufladbaren Akkumulatoren (5,6) erforderlich sind, auf der Basis eines Unterschieds zwischen einer maximalen Aufladungskapazität und einer Ladung in dem Akkumulator für jeden der zwei oder mehreren wiederaufladbaren Akkumulatoren (5,6) zu bestimmen.

**15.** Aufladegerät (2) nach Anspruch 14, des Weiteren umfassend:

eine Messeinheit (34), die geeignet ist, Spannungsunterschiede an den zwei oder mehreren Anschlüssen (8,10) zur Benutzung beim Bestimmen der Aufladeströme zu messen.

**16.** Aufladegerät (2) nach Anspruch 15, des Weiteren umfassend:

eine oder mehrere Nachschlagtabellen (48),
wobei der Regler (32) geeignet ist, aus Angaben, die in der einen oder den mehreren Nachschlagtabellen (48) enthalten sind, eine Auflademenge, die zum vollständigen Aufladen eines Akkumulator erforderlich ist, auf der Basis eines gemessenen Spannungsunterschieds und eines durchschnittlichen Stromverbrauchs des Akkumulators während der Benutzung zu bestimmen.

**17.** Aufladegerät (2) nach Anspruch 16, wobei der Regler (32) geeignet ist, Typen der zwei oder mehreren wiederaufladbaren Akkumulatoren (5,6) zu bestimmen, um Angaben, die in den Nachschlagtabellen (48) enthalten sind, zu erhalten.

**18.** Aufladegerät (2) nach einem der Ansprüche 13 bis 17, wobei einer der zwei oder mehreren wiederaufladbaren Akkumulatoren (5,6) sich bei Benutzung des Aufladegeräts (2) innerhalb eines akkumulatrobetriebenen Geräts (4) befindet und der Regler (32) geeignet ist, einen Spannungsunterschied des einen wiederaufladbaren Akkumulatoren (5) von dem akkumulatorbetriebenen Gerät (4) zum Verwenden beim Bestimmen einer Auflademenge aufzunehmen, die erforderlich ist, um einen wiederaufladbaren Akkumulatoren (5) vollständig aufzuladen.

**19.** Aufladegerät (2) nach Anspruch 18, des Weiteren umfassend:

eine oder mehrere Nachschlagtabellen (48),

wobei der Regler (32) aus der einen oder den mehreren Nachschlagtabellen (48) die Auflademenge, die zum vollständigen Aufladen des einen wiederaufladbaren Akkumulatoren (5) erforderlich ist, auf der Basis einer für den einen wiederaufladbaren Akkumulatoren (5) empfangenen Spannung, eines Akkumulatortyps und eines durchschnittlichen Stromverbrauchs des wiederaufladbaren Akkumulators während der Benutzung bestimmt.

**20.** Aufladegerät (2) nach einem der Ansprüche 13 bis 19, wobei der Regler (32) geeignet ist, den Stromzuteiler (30) zu regulieren, um die zugeteilten Aufladeströme an die zwei oder mehreren verschiedenen jeweiligen Ladeanschlüsse (8,10) dem Fortschreiten des Akkumularotaufladevorgangs entsprechend einzustellen.

**21.** Aufladegerät (2) nach Anspruch 20, wobei der Regler (32) geeignet ist, den Schritt des Einstellens für jeden der zwei oder mehreren wiederaufladbaren Akkumulatoren (5,6) durch Nachprüfen einer Ladung in dem Akkumulator von Zeit zu Zeit durchzuführen, um den Stromzuteiler (30) zu regulieren, um die zugeteilten Ladeströme erneut einzustellen.

22. Aufladegerät (2) nach einem der Ansprüche 13 bis 21, umfassend ein Aufladegerät für ein mobiles elektronisches Gerät (4).

23. Aufladegerät (2) nach einem der Ansprüche 13 bis 22, wobei die einzige Stromquelle eine Stromquelle von 500 mA umfasst.

24. Kombination eines mobilen elektronischen Geräts (4) und eines Aufladegeräts (2) dafür nach einem der Ansprüche 13 bis 23.

**Revendications**

1. Une méthode de chargement de deux ou plusieurs piles rechargeables (5,6) avec un courant de source unique (28) par le biais de deux ou plusieurs orifices de charge (8, 10), les piles (5,6) étant accouplées à des orifices de charge correspondants (8,10).
   comprenant :

   la détermination de la charge relative nécessaire pour recharger de façon intégrale deux ou plusieurs piles rechargeables (5,6), et
   **caractérisée par le fait que** l'affectation des courants de charge provenant du courant de source unique (28) aux deux ou plusieurs orifices de charge correspondants (8,10) est basée sur les quantités de charge correspondantes nécessaires pour charger à fond les deux ou plusieurs piles rechargeables (5,6) de façon que ces dernières se rechargent à peu près en même temps.

2. La méthode conforme à la revendication 1, dans laquelle le stade de la détermination comporte la détermination des quantités de charge relatives qui sont nécessaires pour charger à fond au minimum lesdites deux ou plusieurs piles rechargeables (5,6) sur la base de la différence entre une capacité de charge maximale et une charge dans la pile pour chacune des deux ou plusieurs piles rechargeables (5,6).

3. La méthode conforme à la revendication 2, comprenant le stade de la détermination, pour chacune des deux ou plusieurs piles rechargeables (5,6), de la charge dans la pile en obtenant une différence de tension pour la pile et des informations sur une consommation moyenne de courant de la pile en cours d'usage.

4. La méthode conforme à la revendication 3, dans laquelle le stade de l'obtention d'une différence de tension pour chacune des deux ou plusieurs piles rechargeables (5,6) comprend la mesure de la différence de tension pour chaque pile sur son orifice de charge (8, 10) respectif.

5. La méthode conforme à la revendication 3, dans laquelle une desdites deux ou plusieurs piles rechargeables (5) se trouve à l'intérieur d'un appareil à pile (4), et ladite méthode comprend la réception, dudit appareil fonctionnant à pile (4), d'une différence de tension de ladite pile rechargeable (5) afin de déterminer la charge de la pile (5).

6. La méthode conforme à une quelconque des revendications 3 à 5, dans laquelle les informations sur une consommation moyenne de courant de la pile en cours d'usage s'obtiennent sur un tableau de consultation (48).

7. La méthode conforme à la revendication 6, comprenant le stade de la détermination des types des deux ou plusieurs piles rechargeables (5,6) afin d'obtenir les informations sur le tableau de consultation (48).

8. La méthode conforme à la revendication 1 ou à la revendication 2, comportant également :

   la détermination d'un courant de charge affecté à un certain orifice de charge au moins en partie d'après une consommation moyenne de courant en cours d'usage de la pile rechargeable accouplée audit orifice de charge.

9. La méthode conforme à une quelconque des revendications précédentes, comprenant également la phase d'ajustage des courants de charge affectés aux deux ou plusieurs orifices de charge (8,10) respectifs, en fonction de l'avancement de l'opération de chargement des piles.

**10.** La méthode conforme à la revendication 9, dans laquelle l'opération d'ajustage comprend, pour chacune des deux ou plusieurs piles rechargeables (5,6), le contrôle périodique d'une charge dans la pile afin de rajuster les courants de charge affectés.

**11.** La méthode conforme à une quelconque des revendications précédentes, comprenant une méthode de chargement de piles rechargeables (5,6) pour appareils électroniques mobiles (4).

**12.** La méthode conforme à une quelconque des revendications 1 à 11, dans laquelle le courant de source unique est un courant de source de 500 mA.

**13.** Un chargeur (2) permettant de charger deux ou plusieurs piles rechargeables (5,6), ce chargeur (2) comprenant :

un courant de source unique (28) ;
deux ou plusieurs orifices de charge (8,10),
un répartiteur de courant (30) répartissant des courants de charge dudit courant de source unique (28) auxdits deux ou plusieurs orifices 8,10) ; et

**caractérisé par le fait qu'**un dispositif de contrôle (32) pour la détermination de la charge nécessaire pour charger à fond deux ou plusieurs piles rechargeables (5,6) raccordées aux orifices respectifs desdits deux ou plusieurs orifices de charge (8,10), et pour la détermination desdits courants de charge à répartir par ledit répartiteur de courant (30) sur la base desdites quantités de charge correspondantes relatives déterminées de sorte que dans l'ensemble lesdites deux ou plusieurs piles rechargeables (5,6) se rechargent en même temps.

**14.** Le chargeur (2) conforme à la revendication 13 dans lequel le dispositif de contrôle (32) est adapté de façon à déterminer les charges relatives nécessaires pour recharger les deux ou plusieurs piles rechargeables (5,6) susmentionnées sur la base d'une différence entre une capacité de charge maximale et une charge contenue dans la pile pour chacune desdites deux ou plusieurs piles rechargeables (5,6).

**15.** Le chargeur (2) conforme à la revendication 14, comprenant également :

un dispositif de mesure (34) adapté pour mesurer des différences de tension auxdits deux ou plusieurs orifices de charge (8,10) dans le but de déterminer lesdits courants de charge.

**16.** Le chargeur (2) conforme à la revendication 15, comprenant également :

un ou plusieurs tableaux de consultation (48),

dans lequel ledit dispositif de contrôle (32) est adapté de façon à déterminer, sur la base d'informations contenues dans un ou plusieurs des dits tableaux de consultation (48), une quantité de charge requise pour charger à fond une pile sur la base d'une différence de tension mesurée et d'une consommation de courant moyenne par ladite pile en cours d'usage.

**17.** Le chargeur (2) conforme à la revendication 16, dans lequel le dispositif de contrôle (32) est adapté de façon à déterminer les types des deux ou plusieurs piles rechargeables (5,6) afin d'obtenir des informations contenues dans le tableau de consultation (48).

**18.** Le chargeur (2) conforme à une quelconque des revendications 13 à 17, dans lequel une desdites deux ou plusieurs piles rechargeables (5), utilisée dans le chargeur (2), est située à l'intérieur d'un appareil à pile (4), et ledit dispositif de contrôle (32) est adapté de façon à recevoir une différence de tension de ladite pile rechargeable (5) dudit appareil à pile (4), servant à déterminer une charge nécessaire pour charger à fond ladite pile rechargeable (5).

**19.** Le chargeur (2) conforme à la revendication 18, comprenant également :

un ou plusieurs tableaux de consultation (48),

dans lequel ledit dispositif de contrôle (32) détermine, d'après un ou plusieurs des dits tableaux de consultation (48), la quantité de charge requise pour charger à fond ladite pile rechargeable (5) sur la base d'une tension reçue de ladite pile rechargeable (5), du type de pile, et d'une consommation de courant moyenne de ladite pile rechargeable en cours d'usage.

**20.** Le chargeur (2) conforme à une quelconque des revendications 13 à 19, dans lequel le dispositif de contrôle (32) est adapté de façon à contrôler le répartiteur de courant (30) de façon à ajuster les courants de charge attribués aux deux ou plusieurs orifices de charge (8,10) en fonction de l'avancement du processus de rechargement des piles.

**21.** Le chargeur (2) conforme à la revendication 20, dans lequel le dispositif de contrôle (32) est adapté de façon à effectuer une opération d'ajustage, pour chacune des deux ou plusieurs piles rechargeables (5,6), en vérifiant périodiquement une charge dans la pile afin de contrôler le répartiteur de courant (30) de façon a ajuster les courants de charge répartis.

**22.** Le chargeur (2) conforme à une quelconque des revendications 13 à 21, comprenant un chargeur pour un appareil mobile à pile (4).

**23.** Le chargeur (2) conforme à une quelconque des revendications 13 à 22, dans lequel la source de courant unique comprend une source de courant de 500 mA.

**24.** Un ensemble composé d'un appareil mobile à pile (4) et d'un chargeur (2) conforme ainsi à une quelconque des revendications 13 à 23.

# FIG. 1

BATTERY
6

10

CHARGER 2

4

8

EP 1 569 316 B1

FIG. 2

FIG. 3

START

100 — DETECT BATTERIES CONNECTED TO CHARGER

102 — ANY CONNECTED BATTERIES?

NO

YES

104 — DETERMINE TYPES OF CONNECTED BATTERIES

106 — DETERMINE DIFFERENCE BETWEEN BATTERY'S MAXIMUM CHARGE CAPACITY AND ACTUAL CHARGE

108 — SET CHARGING CURRENTS TO CONNECTED BATTERIES TO COMPLETELY CHARGE THEM AT SUBSTANTIALLY THE SAME TIME

# FIG. 4

**EP 1 569 316 B1**

**REFERENCES CITED IN THE DESCRIPTION**

**Patent documents cited in the description**

- EP 1124300 A

- FR 2841699